# EUROPEAN PATENT APPLICATION

(11) **EP 2 000 325 A2**
(43) Date of publication of application: **10.12.2008**
(21) Application number: 08102484.6
(22) Date of filing: 11.03.2008
(51) Int. Cl.: B44C 1/22, B44C 5/04

(54) **Minute metallic pattern and manufacturing method therefor**

(30) Priority: 08.06.2007 JP 2007152627
(71) Applicant: Tefco Aomori Co., Ltd., Aomori Hirosaki City (JP)
(72) Inventor: Nakayama, Hiroo, Hirosaki City Aomori (JP); Miura, Hidekatsu, Hirosaki City Aomori (JP)
(74) Representative: Tarabbia, Luigi

(57) **Abstract**

Disclosed herein is an individual minute metallic pattern (1) characterized by having grooves of V-shape cross section on a surface thereof formed by a high hardness cutting tool (15). Such individual minute metallic patterns can be manufactured by etching a thin metal plate supported on the first adhesive sheet to thereby forming a target pattern and a pattern for preventing improper positioning arranged on peripheral portions of the target pattern on the first adhesive sheet;
grooving a surface of said target pattern with a high hardness cutting tool to thereby forming a minute metallic pattern having grooves (4) of V-shape cross section;
adhering a second adhesive sheet on a surface of the minute metallic pattern and the pattern for preventing improper positioning;
exposing a back face of the minute metallic pattern and the pattern for preventing improper positioning by peeling the first adhesive sheet;
forming a fixing layer (5) on the back face of the minute metallic pattern; and
laying a release sheet on the fixing layer.

## Description

### [Field of the Invention]

The present invention relates to a minute metallic pattern and producing method therefor used for indicating a logo of an article of commerce and the like.

### [Description of the Related art]

For indicating trade name or manufacturer name, a metallic name plate is attached on a housing of television, audio system, personal computer or the like. Such name plates are made by, generally, pressing a metal sheet and punching one plate having a predetermined shape simultaneously forming a pattern such as characters, figures and the like on a surface of the plate. At the name plate obtained by this method, the plate and the pattern are unified.

On the other hand, as a manufacturing method for an individual pattern, an electrodeposition pattern forming method or an etching method and the like have been known (Patent Document 1: Japanese Patent Application Laying Open No. 2006-281652). According to the electrodeposition pattern forming method and the etching method, because delicate fine patterns can be formed and individual patterns can be obtained as compared with a pressing method, design variations can be enlarged. Further, according to the electrodeposition pattern forming method and the etching method, a thickness of patterns can be thinner as compared with the pressing method.

In the meantime, in these name plates, various treatment are applied on the surface of pattern for increasing decorativeness. As such surface treatment, a method of diamond cutting is known. The diamond cutting is a surface treatment method for cutting a V-shape groove on a pattern surface by a high hardness cutting tool such as a diamond blade and the like. By this method, grooves having depth and sharpness are formed on the pattern at equally-spaced interval, thus, an excellent appearance is given. When operating diamond cutting, because the pattern surface is scraped by the diamond blade, a strong shear force is applied to the pattern.

In case that the plate and the patterns are one body entirely, an improper positioning is not occurred by applying the diamond cutting. To the contrary, in the individual patterns formed by the electrodeposition pattern forming method and the etching method, there is a case that a position of the pattern is dislocated by the strong shear force even when the patterns are fixed on an adhesive sheet.

In the individual patterns formed by the electrodeposition forming method and the etching method, a logo is made by aggregating plural patterns. Therefore, if the one pattern is dislocated, it will be lack of sensation of unity and deteriorate an appearance, a commercial value will be reduced significantly.

For this reason, in the individual patterns formed by the electrodeposition forming method and the etching method, application of the diamond cutting is not operated. Also, in the patterns formed by the electrodeposition forming method, since the metal is precipitated by electroforming, the pattern surface is slightly rounded. When the diamond cutting is applied to the rounded surface pattern, although a center portion having high height is cut, peripheral portions are not cut because of their low height. Namely, in the diamond cutting, since the cutting is operated with fixing the diamond blade at a certain height, if there is a height difference at a work piece, the blade touches a portion having high height only, a low portion is not cut because the blade can not touch to the low portion.
[Patent Document 1] Japanese Patent Application Laying Open No. 2006-281652

### [Disclosure of the Invention]

### [Problems to be solved by the Invention]

The present invention is made upon considering the above mentioned conventional art, and an object of the present invention is to provide a high decorativeness patterns by applying diamond cutting with a high hardness tool such as the diamond blade and the like on the surface of the individual patterns formed by the etching method. The present invention also aims to provide means for applying diamond cutting without dislocating the individual pattern.

### [Means for solving the problem]

Gist of the present invention aims for solving these problems is as follows;

(1) An individual minute metallic pattern having grooves of V-shape cross section on a surface thereof formed by a high hardness cutting tool.
(2) The individual minute metallic pattern as set forth in (1), wherein said grooves of V-shape cross section are equally spaced.
(3) The individual minute metallic pattern as set forth in (1) or (2), wherein said individual minute metallic pattern is composed of aluminum, stainless steel or brass.
(4) An aggregation of the individual minute metallic patterns as set forth in any one of (1) to (3).
(5) The individual minute metallic pattern as set forth in (1) to (3), wherein a fixing layer is provided on a back face thereof.
(6) An aggregation of the individual minute metallic patterns as set forth in (5).
(7) A sheet of an aggregation of individual minute metallic patterns comprising the aggregation of the individual minute metallic pattern as set forth in (6) and a release sheet formed on the fixing layer.
(8) A decorative plate wherein the individual minute metallic pattern as set forth in (5) is fixed to a concave portion of an adhered via the fixing layer.
(9) A method for manufacturing a minute metallic pattern sheet comprising the steps of:
   etching a thin metal plate supported on the first adhesive sheet to thereby forming a target pattern and a pattern for preventing improper positioning arranged on peripheral portions of the target pattern on the first adhesive sheet;
   grooving a surface of said target pattern with a high hardness cutting tool to thereby forming a minute metallic pattern having grooves of V-shape cross section;
   adhering a second adhesive sheet on a surface of the minute metallic pattern and the pattern for preventing improper positioning;
   exposing a back face of the minute metallic pattern and the pattern for preventing improper positioning by peeling the first adhesive sheet;
   forming a fixing layer on the back face of the minute metallic pattern; and
   laying a release sheet on the fixing layer.

### [Effects of Invention]

According to the present invention, by applying diamond cutting to a surface of individual patterns formed by an etching method with a high hardness tool such as a diamond blade and the like, a high decorativeness patterns can be provided. Also, according to the present invention, means for applying diamond cutting without dislocating the individual pattern is provided.

### [Brief description of the drawing]

[Fig. 1] Fig. 1 shows a perspective view of a decorative plate according to the present invention.
[Fig. 2] Fig. 2 shows an enlarged section of Fig. 1.
[Fig. 3] Fig. 3 shows a cross sectional view along a line A-A of Fig. 1.
[Fig. 4] Fig. 4 shows one step of manufacturing minute metallic pattern.
[Fig. 5] Fig. 5 shows one step of manufacturing minute metallic pattern.
[Fig. 6] Fig. 6 shows one step of manufacturing minute metallic pattern.
[Fig. 7] Fig. 7 shows one step of manufacturing minute metallic pattern.
[Fig. 8] Fig. 8 shows one step of manufacturing minute metallic pattern.
[Fig. 9] Fig. 9 shows one step of manufacturing minute metallic pattern.
[Fig. 10] Fig. 10 shows one step of manufacturing minute metallic pattern.
[Fig. 11] Fig. 11 shows a step of fixing minute metallic pattern to adherend.
[Fig. 12] Fig. 12 shows a step of fixing minute metallic pattern to adherend.
[Fig. 13] Fig. 13 shows a cross sectional view of minute metallic pattern sheet.

### [Best mode for carrying the Invention]

Hereinafter, the present invention will be explained specifically with referring drawings.

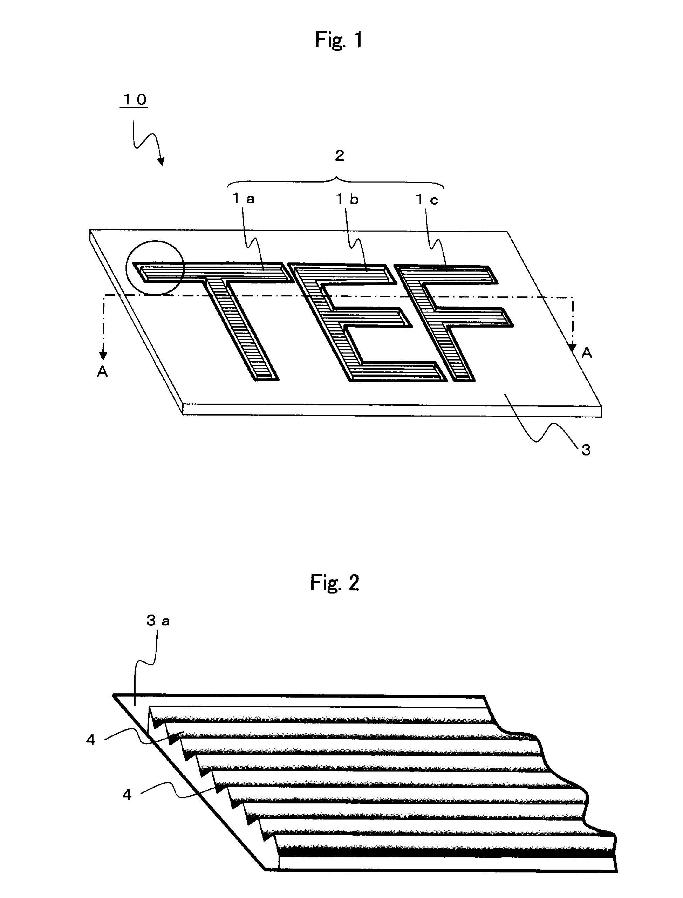

Fig. 1 shows a perspective view of a decorative plate 10 which is composed of an aggregation of plurality of an individual minute metallic pattern 1. Namely, the decorative plate 10 of the present invention 10 is composed of an aggregation 2 which is fixed in a concave portion 3a of an adherend 3. The aggregation 2 is composed of minute metallic patterns 1a, 1b, 1c which are individual respectively.

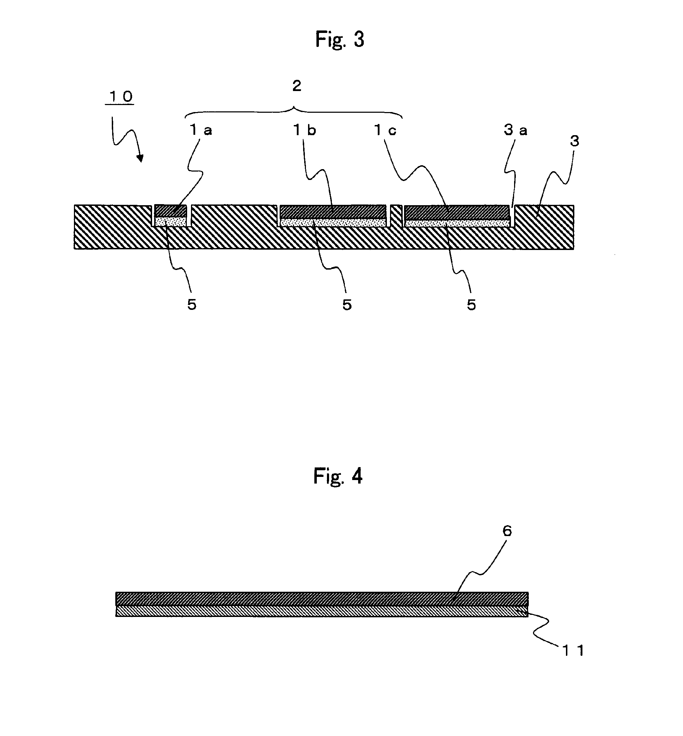

Fig. 2 is an enlarged view of encircled portion of Fig. 1, Fig. 3 is a cross sectional view along a line A-A shown in Fig. 1.

An individual minute metallic pattern 1 is formed as characters, figures, other pattern shapes as shown in Fig. 1. Each of the minute metallic patterns is individual respectively, is not contact with the other minute metallic patterns, and is not formed integrally. The individual minute metallic pattern 1 constitutes a logo of an article of commerce and the like, as an aggregation 2 which is a plurality of the pattern aggregated, however, the logo may be composed of the single minute metallic pattern. In Fig. 1, a logo [TEF] is shown
wherein three individual minute metallic patterns 1a (T), 1b (E) and 1c(F) are aggregated.

A material of the individual minute metallic pattern 1 is not particularly limited. In view of following mentioned cutting workability, price and burnish, it is preferable to be made of aluminum, stainless steel or brace.

Though thickness of the individual minute metallic pattern 1 is not particularly limited, it is preferably about 0.2mm to 0.4mm at the most thick portion, upon considering productivity by the etching method.

Grooves 4 having a cross sectional V-shape are formed on a surface of the individual metallic pattern 1 by a high hardness cutting tool 15 (see Fig. 2). A depth of the grooves 4 is shallow than a thickness of the individual minute metallic pattern 1, and it is about 10 to 40µm in general. Also, although a pitch of grooves 4 (a length of bottom portions of adjacent grooves) is various depend on aesthetics of purposes, normally about 0.1mm to 0.3mm, and it is preferable to be equivalent pitches. Further, a bottom angle of the groove 4 is about 110 to 140°. Such the individual minute metallic pattern 1, wherein the grooves are formed on its surface, comprises unique burnish and excellent aesthetics is given. By suitably setting a depth, pitch and bottom angle of the groove 4, various aesthetics individual minute metallic patterns can be produced. Further, a back face of the individual minute metallic pattern is flat, a fixing layer 5 described below can be coated certainly.

The grooves 4 are formed by cutting the surface of the individual minute metallic patter 1 with the high hardness cutting tool 15. The high hardness cutting tool 15 is harder than a metallic material composing the minute metallic patter 1, although it is not particularly limited as far as it is available to cut the surface of the minute metallic pattern, a diamond blade and tungsten blade are preferably used particularly, because sharpness grooves can be made and a longer life time.

The grooves 4 formed by the high hardness cutting tool 15 comprise deep sharpness forms. As one example of a surface treatment, a hair line process which scratches a surface by a metallic brush and the like is known. However, pitches and cross sectional shapes of hair line patterns are not constant/ It will be a totally different aesthetics from scratching marks by the diamond cutting.

The individual minute metallic pattern 1 according to the present invention has the above mentioned constitution, normally, it is fixed on various adherend 3 via a fixing layer 5 formed on a back face of the individual minute metallic patterns 1 (see Fig. 3). The fixing layer 5 is not particularly limited as far as the individual metallic matters 1 can be firmly bonded to the adherend 3, a general-purpose adhesive, tacky agent or the like can be used. In view of capability of preventing running-off of adhesive and obtaining a high adhesion force, the tacky agent, the hot-melt adhesive, the ultraviolet curing adhesive, or a mixed adhesive of these adhesives or epoxy adhesive is preferably used.

Representative examples of UV curing pressure-sensitive adhesives are by no means limited and a rubber pressure-sensitive adhesive in which a photopolymerizable compound such as an addition-polymerizable compound having at least 2 unsaturated bonds or an alkoxysilane having an epoxy group, and a photopolymerization initiator such as a carbonyl compound or an organic sulfur compound, a peroxide, an amine, or onium salt compound are compounded with each other or an acrylic-base pressure-sensitive adhesive or the like can be mentioned (refer to Japanese Patent laid open No. 60-196956). Amount of the photopolymerizable compound and the photopolymerization initiator to be compounded are, ordinarily, 10 to 500 parts by weight and 0.1 to 20 parts by weight per 100 arts of the base polymer, respectively.

The hot-melt adhesive has a property such that it sticks to the adherend 3 in a melting state and, by cooling, it is solidified and adheres thereto. Various types of hot-melt adhesives are known. As the tacky agent and the epoxy adhesive, an article on the market is used.

For example, in a case in which the fixing layer 5 is formed by using the mixed adhesive of the hot-melt adhesive and the ultraviolet curing adhesive, even when an ultraviolet ray irradiation conditions is not appropriate and, then, an adhesion property thereof is not fully exhibited, since the adhesion force is complemented by the hot-melt adhesive, the individual minute metallic pattern 1 can firmly be fixed. Further, by using the hot-melt adhesive or the tacky agent, the individual minute metallic pattern 1 can be fixed without being subjected to the ultraviolet ray irradiation. Thickness of the fixing layer 5 is not particularly limited and is preferably from 10 to 60µm, more preferably from 15 to 50µm and particularly preferably from 15 to 30µm.

The adherend 3 to which the individual minute metallic pattern 1 is adhered is any one of various types of devices to which the product logo or the like is adhered and is not limited to a specific shape and may by in a planer shape or a curved face shape. The adherend 3 is made of a metal or various types of synthetic resins and its material is not particularly limited to.

When the individual minute metallic pattern 1 is fixed to the surface of the adherend 3, since it protrudes from the surface of the adherend, it may sometimes be dropped by a mechanical shock or, when the pattern 1 has a sharp shape, there is a case in which skin is hurt by a contact or a fiber of clothes is hooked. In order to prevent these problems, it is preferable that the individual minute metallic pattern 1 is fit in the inside of a concave portion 3a of the adherend 3 which has the concave portion having almost the same shape as that of said pattern and, then, fixed therein.

Namely, as shown in Fig. 3, a decorative plate 10 according to the present invention comprises adherend 3 having a concave portion 3a and the individual minute metallic pattern 1 having almost the same shape as that of the concave portion 3a, in which the individual minute metallic pattern 1 is fixed in the inside of the concave portion 3a through the fixing layer 5. Note that the individual minute metallic pattern 1 forms the product logo and the like as the aggregation 2 in which a plurality of the individual minute metallic pattern is aggregated.

Further, thickness of the adherend 3 is not particularly limited, varies depending on applications of the decorative plate 10, is suitably set according to an entire thickness of the individual minute metallic pattern 1 and the fixing layer 5 and is ordinarily from about 500 to about 5000µm.

A method for forming the concave portion 3a varies depending on a material of the adherend 3 and is properly selected in accordance with the material. For example, it may be a press forming method or an etching method and, in a case that the material is a synthetic resin, it may be a molding method by using a metal mold. A contour shape of the concave portion 3a is almost the same as that of the individual minute metallic pattern 1 adhered. Namely, the width and the length of the concave portion 3a are set to be the same as or a little larger than those of the individual minute metallic pattern 1. When they are set to be a little larger, the concave portion 3a has a similar figure to that of the individual minute metallic pattern 1 and the width and the length thereof are set to be larger than those of the individual minute metallic pattern 1 by about 100 to 300µm.

In the decorative plate 10 according to the present invention, the individual minute metallic pattern 1 is fixed in the inside of the concave portion 3a through the fixing layer 5. Thickness of the fixing layer 5 is as described above.

Further, in the decorative plate 10 according to the present invention, a total thickness of the individual minute metallic pattern 1 and the fixing layer 5 is, based on depth of the concave portion 3a, in the range of preferably from -200µm to +50µm, more preferably from -150µm to ±0µm and particularly preferably from -100µm to -50µm of the depth of the concave portion 3a.

According to the decorative plate 10 of the present invention, since the individual minute metallic pattern 1 is fixed in the inside of the concave portion 3a of the adherend 3 through the fixing layer 5, a minute pattern is not dropped.

Further, by setting the total thickness of the individual minute metallic pattern 1 and the fixing layer 5, and the depth of the concave portion 3a to be such value as described above, an acute angle portion at an end portion of the individual minute metallic pattern becomes not protruded from the surface of the adherend 3; therefore, even when the pattern has a sharp edge, an abrasion and an injury caused by contact can be prevented.

Hereinafter, methods for producing the individual minute metallic pattern of the present invention will be described as exemplifying an aggregated sheet thereof.

Firstly, as shown in Fig. 4, a thin metal plate 6 is temporally adhered on a first adhesive sheet 11. The fist adhesive sheet 11 is that, in order to facilitate transferring step described below, an adhesive sheet having lower adhesive force than a second adhesive sheet 12 or the ultraviolet curing adhesive sheet (UV sheet) which is capable to decreasing the adhering force by ultraviolet ray irradiation and the like may be preferably.

The thin metal plate 6 is a primary material of the individual minute metallic pattern, thickness thereof is equal to the above mentioned thickness of the individual minute metallic pattern. Further, the thin metal plate 6 having high thickness accuracy is particularly preferable. In case that the thickness accuracy is low, thickness of a resist film described below becomes ununiformity, an etching failure may be occurred in some time. Also, when cutting the pattern surface, contact of the high hardness cutting tool 15 to the pattern surface is not constantly which causes ununiformity forming the grooves, there will be sometimes deteriorate an appearance.

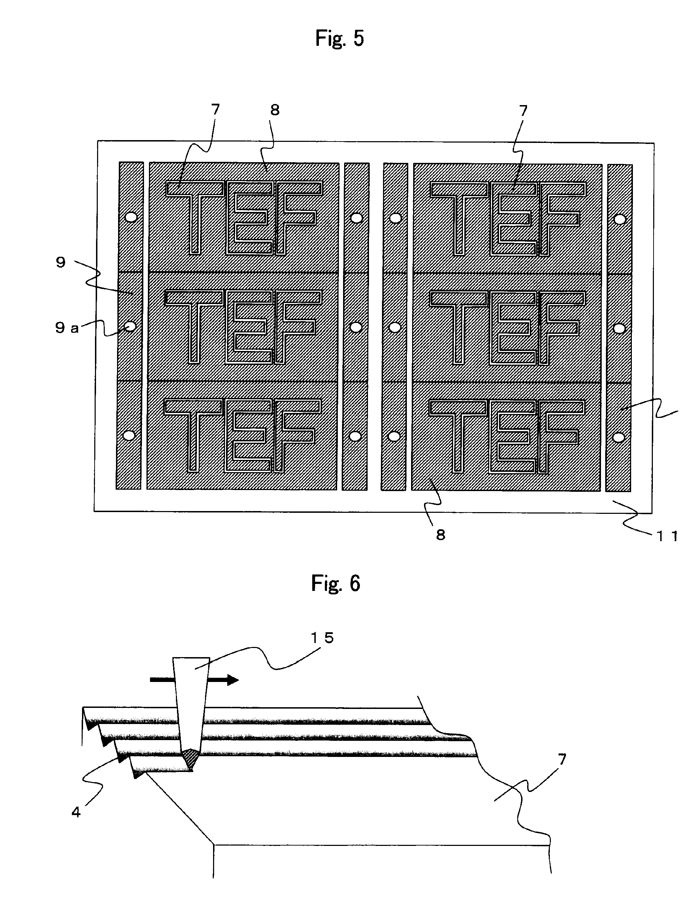

Then, by etching the thin metal plate 6 supported on the first adhesive sheet 11, a target pattern 7 and a dislocation preventing pattern 8 arranged at peripheral edge portion of the target pattern 7 are formed on the first adhesive sheet 11, as shown in Fig. 5.

Formation of a pattern by etching is performed, for example, by after forming a resist film on the thin metal plate 6, performing each operation of exposing, developing and etching and finally, removing the resist film. By such method as described above, the target pattern 7 and the dislocation preventing pattern 8 are formed on the first adhesive sheet 11. The target pattern 7 is formed as the same shape as of the individual minute metallic pattern 1. The dislocation preventing pattern 8 is at arranged a peripheral edge portion of the target pattern 7, and prevent dislocation of the target pattern 7 by resisting to a shearing force when the shearing force is added to the target pattern 7.

Also, when etching, it is preferable to form a guide pattern 9 at the same time in addition to the target pattern 7, the dislocation preventing pattern 8. In the guide pattern 9, guide hole 9a are provided, which are used for adjusting position of the minute metallic pattern 1 of the present invention when adhering on various adherend 3.

By passing through such steps as described above, the target pattern 7 and dislocation preventing pattern 8 are formed on the first adhesive sheet 11.

Next, as shown in Fig. 6, by grooving the surface of the target pattern 7 with a high hardness cutting tool 15, the minute metallic pattern 1 having grooves 4 of V-shape cross section is formed. The high hardness cutting tool 15 is as above described. The surface of the target pattern 7 is cut by moving any one of the cutting tool 15 or the pattern 7, with maintaining a blade edge of the high hardness cutting tool 15 at a predetermined height which is capable to cut the surface of the target pattern. Formation pattern of the groove 4 is not particularly limited. It may be formed a lateral direction to the target pattern 7 as shown in drawings, or it may be a longitudinal direction. Further, it may be cut as an oblique direction, also it may be cut as a circular arc shape. By a formed pattern of the groove 4, various aesthetics can be given.

Further, when cutting, the groove may be formed not only on the surface of the target pattern 7, but also on surfaces of the dislocation preventing pattern 8 and the guide pattern 9.

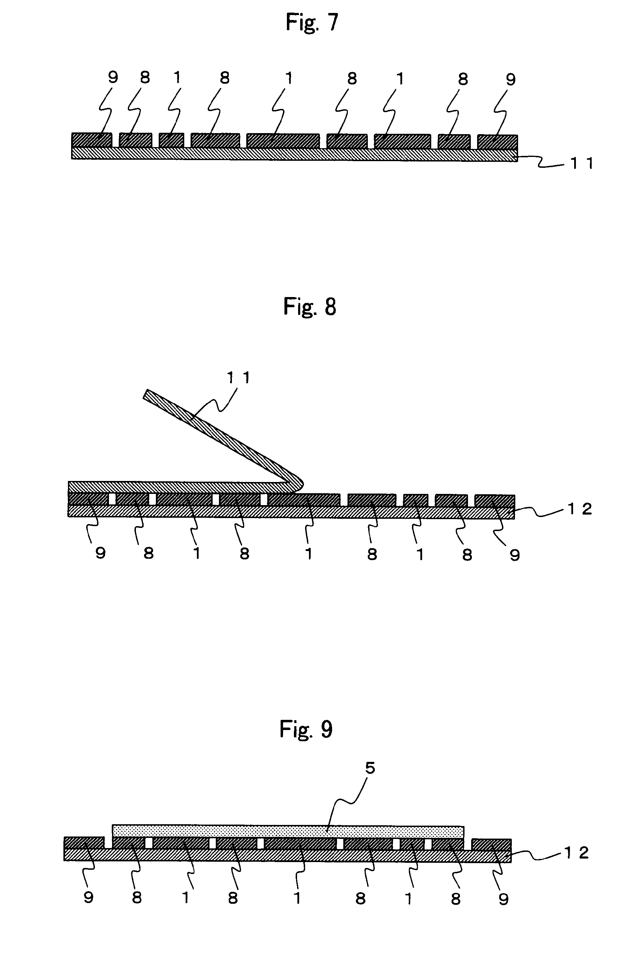

By passing through such steps as described above, as shown in Fig. 7, pattern groups in which the grooves 4 are formed on the first adhesive sheet 11 can be obtained.

Next, the second adhesive sheet 12 is adhered on a surface of the pattern group in which the grooves are formed, as shown in Fig. 8, transferring the pattern group onto the second adhesive sheet 12 by peeling the first adhesive sheet 11 and a back face of the pattern group is allowed to be exposed. On this occasion, in order to surely transfer the patterns from the fist adhesive sheet 11 to the second adhesive sheet 12, it is preferable to select the second adhesive sheet 12 having higher adhesive force than that of the first adhesive sheet 11. Also, when the UV sheet which is capable to decrease the adhesive force by ultraviolet ray irradiation is used as the first adhesive sheet 11, the pattern group is easily transferred to the second adhesive sheet 12 by, subjecting the fist adhesive sheet 11 to ultraviolet ray curing to reduce the adhesion force thereof, after the etching process.

With respect to the transferred pattern group on the second adhesive sheet 12, a groove formed face is arranged on the adhesive sheet side, a flat back face is exposed.

Next, forming a fixing layer 5 on a back face of the exposed pattern group. Thickness of the fixing layer 5 and preferable adhesive agent and the like are as above described. Forming of the fixing layer 5 is operated by applying adhesive agent which forms the fixing layer, if necessary, after diluting by solvent, according to silk printing or spraying method, preferably it is conducted by the silk printing.

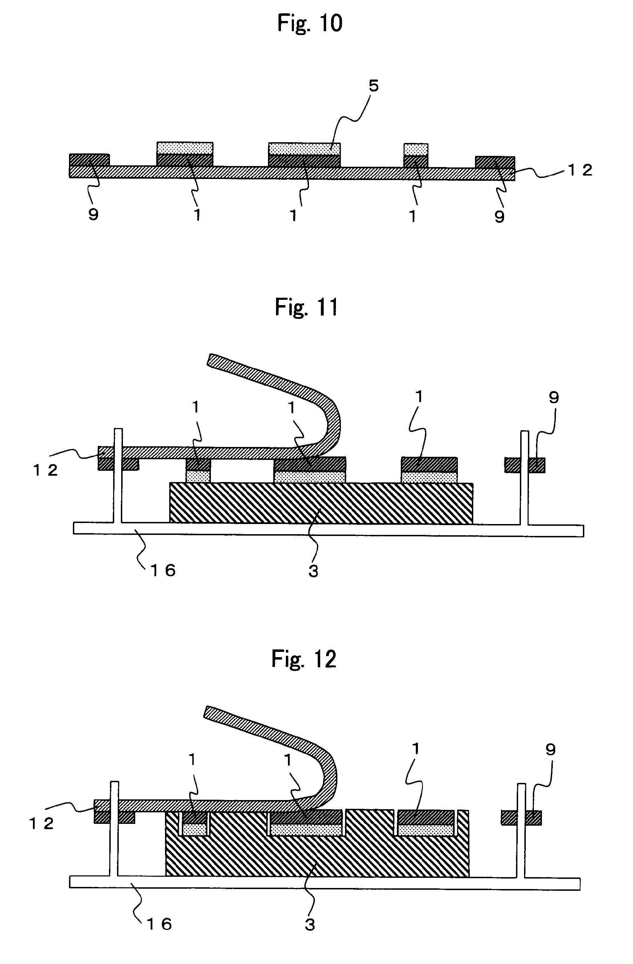

On the occasion of forming the fixing layer 5, as shown in Fig. 9, it is preferable to apply adhesive agent as a status that the dislocation preventing pattern 8 is existing. In this case, the dislocation preventing pattern 8 is used as a mask, by removing the dislocation preventing pattern 8 after applying the adhesive, as shown in Fig. 10, unnecessary adhesives at peripheral of the minute metallic pattern 1 can be removed, hence running off of excess adhesive can be prevented at the time of adhering the minute metallic pattern to the adherend 3.

Also, after removing the dislocation preventing pattern 8, the adhesive may be applied through a mask having openings corresponding to positions of the minute metallic pattern 1. By removing the mask after applying the adhesive, the fixing layer 5 can be formed only on the back face of the minute metallic pattern 1.

Thereafter, the minute metallic pattern 1 is adhered to the adherend 3 through the fixing layer 5. Specifically, as shown in Fig. 11, upon positioning the minute metallic pattern 1 on the adherend 3, conducting mounting and pressure bonding to fix the minute metallic pattern to the adherend 3, then peeling the second adhesive sheet 12, the minute metallic pattern 1 is adhered to the adherend 3. On this occasion, in case that the fixing layer 5 is composed of the hot-melt type adhesive, heating operation is conducted to fix the minute metallic pattern 1.

In case that the guide pattern 9 is also formed, the positioning can be operated by the guide hole 9a provided in the guide pattern 9. Namely, as shown in Figs. 11 and 12, by inserting a guide pin 16 of a positioning jig to the guide hole 9a of the guide pattern 9, the minute metallic pattern 1 can be located at a predetermined position. As shown in Fig. 12, at the time of adhering the minute metallic pattern 1 to the adherend 3 in which the concave portion 3a is provided, severe precise positioning is required. Such positioning can be facilitated by providing the guide pattern 9 and productivity can be increased.

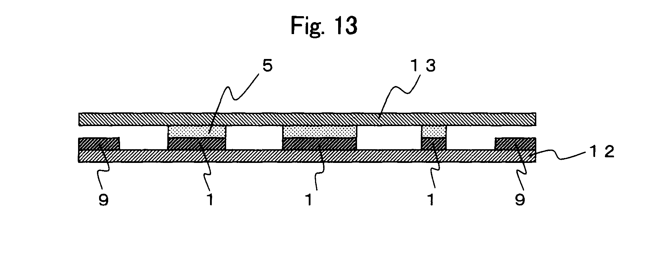

Also, prior to the adhering step, as shown in Fig. 13, a release sheet 13 is temporarily adhered on the fixing layer 5 to thereby aging the fixing layer. It is possible to transport and store as a sheet of the aggregated minute metallic patterns in which the release sheet 13 is layered on the fixing layer face of the aggregation 2 of the minute metallic pattern. Then after, at the time of adhering to the adherend 3, the above described fixing step is conducted by peeling the release sheet 13.

## Claims

1. An individual minute metallic pattern having grooves of V-shape cross section on a surface thereof formed by a high hardness cutting tool.

2. The individual minute metallic pattern as set forth in claim 1, wherein said grooves of V-shape cross section are equally spaced.

3. The individual minute metallic pattern as set forth in claim 1 or 2, wherein said individual minute metallic pattern is composed of aluminum, stainless steel or brass.

4. An aggregation of the individual minute metallic patterns as set forth in any one of claims 1 to 3.

5. The individual minute metallic pattern as set forth in claims 1 to 3, wherein a fixing layer is provided on a back face thereof.

6. An aggregation of the individual minute metallic patterns as set forth in claim 5.

7. A sheet of an aggregation of individual minute metallic patterns comprising the aggregation of the individual minute metallic pattern as set forth in claim 6 and a release sheet formed on the fixing layer.

8. A decorative plate wherein the individual minute metallic pattern as set forth in claim 5 is fixed to a concave portion of an adhered via the fixing layer.

9. A method for manufacturing a minute metallic pattern sheet comprising the steps of:
etching a thin metal plate supported on the first adhesive sheet to thereby forming a target pattern and a pattern for preventing improper positioning arranged on peripheral portions of the target pattern on the first adhesive sheet;
grooving a surface of said target pattern with a high hardness cutting tool to thereby forming a minute metallic pattern having grooves of V-shape cross section;
adhering a second adhesive sheet on a surface of the minute metallic pattern and the pattern for preventing improper positioning;
exposing a back face of the minute metallic pattern and the pattern for preventing improper positioning by peeling the first adhesive sheet;
forming a fixing layer on the back face of the minute metallic pattern; and
laying a release sheet on the fixing layer.
